# EUROPÄISCHE PATENTSCHRIFT

(11) **EP 3 062 943 B1**
(45) Veröffentlichungstag und Bekanntmachung des Hinweises auf die Patenterteilung: **06.12.2017**
(21) Anmeldenummer: 14784077.1
(22) Anmeldetag: 14.10.2014
(51) Int. Cl.: G21C 5/06, G21C 19/19, B21D 39/06, F16B 19/10, B21D 41/02, B23P 11/00

(54) **VERFAHREN ZUR VERBINDUNG EINES ZENTRIERSTIFTES MIT EINEM KERNGITTER**
METHOD FOR CONNECTING A CENTERING PIN TO A CORE GRATE
PROCÉDÉ DE LIAISON D'UNE BROCHE DE CENTRAGE À UNE GRILLE DE COEUR

(30) Priorität: 29.10.2013 DE 102013111923; 05.12.2013 DE 102013113523
(43) Veröffentlichungstag der Anmeldung: 07.09.2016
(73) Patentinhaber: AREVA GmbH, 91052 Erlangen (DE)
(72) Erfinder: FORSTER, Josef, 96114 Hirschaid (DE); MEIER-HYNEK, Konrad, 91074 Herzogenaurach (DE); MÜLLER, Erhard, 91362 Pretzfeld (DE); LEIBOLD, Friedrich, 91230 Happurg (DE); LEIBOLD, Andreas, 91230 Happurg (DE)
(74) Vertreter: Schlögl, Markus
(86) Internationale Anmeldenummer: PCT/EP2014/072043
(87) Internationale Veröffentlichungsnummer: WO 2015/062861

(56) Entgegenhaltungen:
- WO-A1-90/03647
- US-A- 5 089 215

## Beschreibung

Die Erfindung betrifft ein Verfahren zur Verbindung eines Zentrierstifts mit einem Kerngitter des Reaktordruckbehälters eines Druckwasserreaktors. Ein Reaktor der genannten Art umfasst ein oberes und ein unteres Kerngitter, zwischen denen die Brennelemente des Reaktors eingespannt sind. Das untere Kerngitter z.B. umfasst eine Vielzahl von sich horizontal erstreckenden Platten, sog. Abstellplatten, an denen sich die Brennelemente abstützen und an denen in der Regel zwei Zentrierstifte fixiert sind.

Die Zentrierstifte sind jeweils in einer Aufnahmebohrung der genannten Platte fixiert, wobei ein zur Zentrierung eines Brennelements dienender erster Axialabschnitt des Zentrierstifts vertikal aus einer horizontal verlaufenden und dem Zentrum des Reaktordruckbehälters zugewandten Innenseite der Platte vorsteht. Dieser Axialabschnitt ragt im Endmontagezustand, also beispielsweise bei betriebsbereitem Reaktor, in eine Öffnung am Brennelementfuß bzw. am Brennelementkopf hinein. Ein zweiter Axialabschnitt des Zentrierstifts dient zu dessen Fixierung an der Platte und ist zu diesem Zweck in eine Aufnahmebohrung der Platte eingesetzt. An seinem Freiende geht der zweite Axialabschnitt in einen radial nach außen verformbaren Fixierabschnitt über, welcher im Endmontagezustand mit einem aus der Bohrung heraus ragenden aufgeweiteten Überstand unter Ausbildung eines Formschlusses in einer zum Zentrum des Reaktordruckbehälters weisenden Axialrichtung die der Innenseite abgewandte Außenseite der Platte hintergreift.

Bei einem aus US 5,089,215 bekannten Kerngitter sind Zentrierstifte vorhanden, die zu ihrer Montage am Kerngitter von einer sich koaxial zu ihrer Mittellängsachse erstreckenden Bohrung durchsetzt sind, welche im Bereich des Fixierabschnitts eine Verengung aufweist. Zur Aufweitung des Fixierabschnitts wird von der Seite des ersten Axialabschnitts her ein Dorn in die Bohrung eingeführt, der beim Passieren der Verengung den Überstand des Fixierabschnitts aufweitet, so dass der Zentrierstift in der Aufnahmebohrung axial fixiert wird.

Um eine radial nach außen gerichtete Verformung mit Hilfe des Dorns bewirken zu können, sind Materialschwächungen in Form von sich radial von dem verengten Bohrungsbereich wegerstreckenden Nuten und von der Außenfläche des Fixierbereichs sich radial nach innen erstreckende Nuten vorgesehen. Der bekannte Zentrierstift weist somit insgesamt eine sehr komplexe, nur mit hohen Fertigungsaufwand zu realisierende Formgebung auf. Ein weiterer Nachteil besteht darin, dass zur Aufweitung des Fixierabschnitts der Dorn mit einer hohen Kraft in die Verengung des Zentrierstifts eingeschoben werden muss. Dies führt oft dazu, dass sich der Dorn im Zentrierstift verklemmt oder gar abbricht.

Bei den bekannten Kerngittern weist der Fixierbereich der Zentrierstifte eine sich in Umfangsrichtung erstreckende Nut auf. Diese Nut ist an einer solchen Axialposition des Fixierabschnitts positioniert, dass bei dessen Aufweitung eine zur Aufnahmebohrung weisende Wand der genannten Nut den Rand der Aufnahmebohrung nach Art eines Hakens hintergreift und dabei auf den Bohrungsrand gepresst wird. Nachteilig bei dieser Vorgehensweise ist, dass die Axialposition der Nutwand auf die Dicke der Abstellplatte abgestimmt sein muss, so dass bei Platten mit unterschiedlicher Dicke entsprechend ausgelegte Zentrierstifte hergestellt werden müssen.

Ein weiterer Nachteil des bekannten Kerngitters ist, dass sich die Zentrierstifte im Falle eines Austausches aufgrund des den Rand der Aufnahmebohrung hakenförmig hintergreifenden Fixierabschnitts nur schwer aus den Aufnahmebohrungen entfernen lassen.

Aus WO 90/03647 A1 ist eine Anordnung zum Zentrieren von Bauteilen eines Kernreaktors bekannt, bei der in einem Kernbehälter Brennelemente angeordnet sind, deren Köpfe durch einen Gerüsteinsatz fixierbar sind, wobei am Kopf der Brennelemente Zentrierstifte angeordnet sind und am Gerüsteinsatz Öffnungen angebracht sind, in welche die Zentrierstifte einführbar sind.

Aufgabe der Erfindung ist es, ein Verfahren zur Verbindung eines Zentrierstifts mit einem Kerngitter des Reaktordruckbehälters eines Druckwasserreaktors anzugeben, welches hinsichtlich der genannten Nachteile verbessert ist.

Diese Aufgabe wird durch ein Verfahren nach Anspruch 1 gelöst.

Bei dem erfindungsgemäßen Verfahren ist in einem Vormontagezustand, in dem der axial wirksame Formschluss noch nicht besteht, der Fixierabschnitt ein Hohlzylinder, der auf seiner gesamten Länge eine auf der Hüllfläche eines Kreiszylinders mit einheitlichem Außendurchmesser verlaufende Außenumfangsfläche aufweist. In einem Endmontagezustand ist der Überstand infolge der Aufweitung mit Hilfe des Aufweitewerkzeugs unter Ausbildung des axial wirksamen Formschlusses aufgeweitet.

Zunächst ist festzuhalten, dass die Wandstärke des hohlzylindrisch ausgebildeten Fixierabschnitts so gewählt werden kann, dass einerseits ein radiales Aufweiten mit geringer Kraft möglich ist, wobei der Zentrierstift aber dennoch zuverlässig in der Aufnahmebohrung der Platte gehalten ist. Die geringen Wandstärken ergeben sich aus dem Umstand, dass das Aufweitewerkzeug nicht über eine zentrale Bohrung des Zentrierstifts dem Fixerabschnitt zugeführt ist, so dass eine aufwändig herzustellende, eine Verengung des zentralen Kanals und materialschwächende Nuten aufweisende Form für den Fixierabschnitt nicht erforderlich ist. Bei der Erfindung ist zur Herstellung des Fixierabschnitts lediglich eine stirnseitige Axialbohrung in den zweiten Axialabschnitt der Zentrierstifts einzubringen, was mit wenig Herstellungsaufwand gelingt.

Dadurch, dass der Fixierabschnitt auf seiner gesamten Länge eine auf der Hüllfläche eines Kreiszylinders mit einheitlichem Außendurchmesser verlaufende Außenumfangsfläche oder zumindest entsprechende Umfangsabschnitte aufweist, lässt sich der Zentrierstift problemlos an Abstellplatten mit unterschiedlicher Dicke fixieren. Mit zunehmender Dicke der Platte verringert sich lediglich die Größe des Überstands bzw. des sich daraus durch die Aufweitung gebildeten Konus.

Ein weiterer Vorteil der in Rede stehenden Ausgestaltung ist, dass ein defekter Zentrierstift auf einfache Weise aus der Aufnahmebohrung entfernbar ist, indem der Überstand mit Hilfe eines Stempels mit einer zum ersten Axialabschnitt hin gerichteten Kraft beaufschlagt wird. Infolge der Kraftbeaufschlagung wird der überstehende Konus unter Verengung auf seine ursprünglich, im Vormontagezustand vorliegende Form in die Aufnahmebohrung hinein und schließlich aus dieser heraus gedrückt. Ein derartiges Vorgehen wäre bei der bekannten Ausgestaltung der Verbindung zwischen Zentrierstift und Platte nur schwer möglich.

Die Erfindung wird nun unter Bezugnahme auf die beigefügten Zeichnungen näher erläutert. Es zeigen:
Fig. 1 einen schematischen Querschnitt durch den unteren Teil eines Druckwasserreaktors, in dem ein unteres Kerngitter angeordnet ist,
Fig. 2 den Ausschnitt II aus Fig. 1 schräg von oben betrachtet und in perspektivischer Darstellung,
Fig. 3 eine Schnittdarstellung entsprechend Linie III-III in Fig. 2,
Fig. 4 den Ausschnitt IV in Fig. 3 in längsgeschnittener Darstellung, welche einen in einer Aufnahmebohrung an einer Platte axial fixierten Zentrierstift zeigt,
Fig. 5 eine Fig. 4 entsprechende Darstellung, wobei diese jedoch einen Vormontagezustand betrifft, in dem der Zentrierstift noch nicht axial fest in der Aufnahmebohrung fixiert ist,
Fig. 6 eine Seitenansicht eines Zentrierstifts mit abgewandeltem Fixierabschnitt,
Fig. 7 eine schematische, zum Teil geschnittene Darstellung, welche die Fixierung eines Zentrierstifts in einer Aufnahmebohrung einer Platte verdeutlicht,
Fig. 8 eine Unteransicht auf den in einer Platte fixierten Zentrierstift in Richtung des Pfeils VIII in Fig. 5 gesehen.

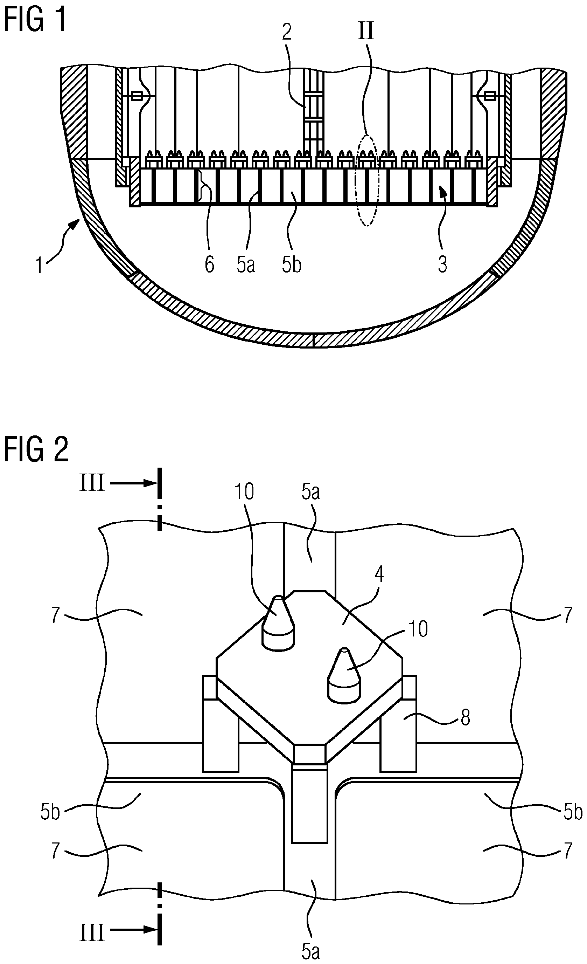

Der Reaktor eines Druckwasserreaktors umfasst einen Reaktordruckbehälter 1, in dem eine Vielzahl von sich vertikal erstreckenden und parallel zueinander angeordneten Brennelementen 2 angeordnet ist (Fig. 1). Die Brennelemente 2 stützen sich mit ihrem unteren Ende bzw. ihrem Fuß an einem unteren Kerngitter 3 und mit ihrem oberen Ende bzw. ihrem Kopf an einem oberen Kerngitter (nicht gezeigt) ab. Für die weitere Beschreibung wird auf das untere Kerngitter 3 Bezug genommen.

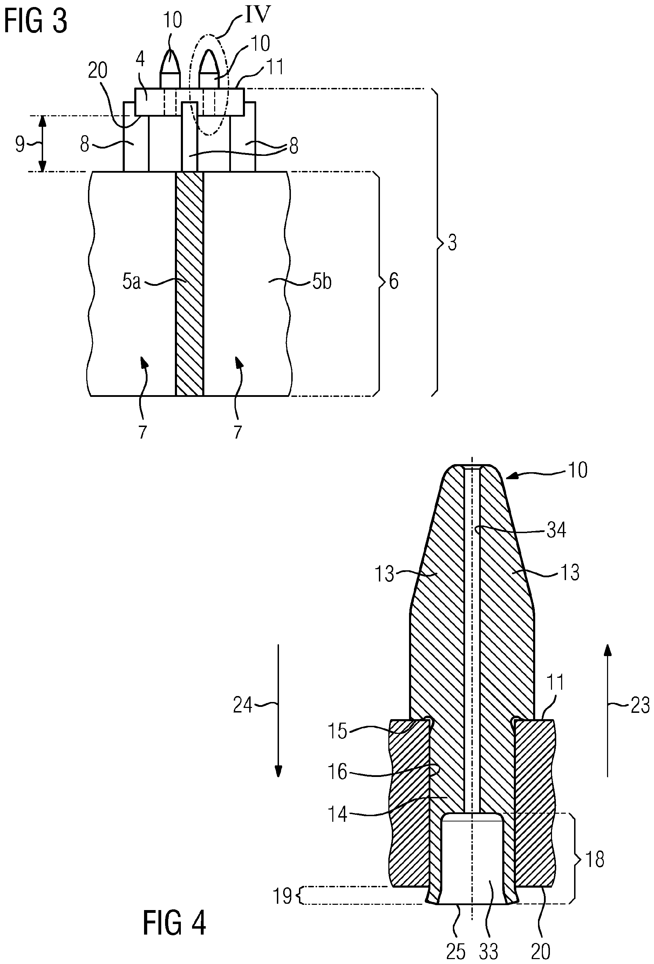

Wie insbesondere Fig. 2 und 3 zu entnehmen ist, ist an der dem Zentrum des Reaktordruckbehälters 1 zugewandten Innenseite des unteren Kerngitters 3 eine Vielzahl von Abstellplatten, im folgenden kurz mit Platten 4 bezeichnet, angeordnet. Die Platten 4 sind mit Vertikalabstand 9 zu einem aus senkrecht zueinander verlaufenden Gitterwänden 5a, 5b gebildetem Grundgitter 6 angeordnet. Die Gitterwände 5a, 5b schließen jeweils eine Zelle bzw. einen Strömungskanal 7 ein, wobei jeder Strömungskanal 7 einem Brennelement 2 zugeordnet ist. Die im Wesentlichen quadratischen Platten 4 sind jeweils an einem Kreuzungspunkt der Gitterwände 5a, 5b positioniert und mit Hilfe von Füßen 8 an diesen fixiert. An der Platte 4 sind zwei Zentrierstifte 10 fixiert.

Der Zentrierstift 10 ist in einen ersten Axialabschnitt 13 und einen zweiten Axialabschnitt 14 unterteilt, wobei der Übergang zwischen den beiden Abschnitten durch eine zum zweiten Abschnitt weisende Radialschulter 15 gebildet ist. Der erste Axialabschnitt 13 ragt aus der dem Zentrum des Reaktordruckbehälters 1 zugwandten Innenseite 11 der Platte 4 vor und dient zur Fixierung bzw. Zentrierung eines Brennelements 2. Zu diesem Zweck greift er in eine Bohrung (nicht gezeigt) am Brennelementfuß ein. Eine vergleichbare Situation liegt auch beim oberen Kerngitter (nicht gezeigt) vor. Der zweite Axialabschnitt ist in eine die Platte 4 vertikal durchsetzende Aufnahmebohrung 16 eingesetzt. Sein Freiende 17 ist von einem radial nach außen verformbaren Fixierabschnitt 18 gebildet.

Die Länge des zweiten Axialabschnitts 14 ist größer als die Dicke der Platte 4. Bei vollständig in die Aufnahmebohrung 16 eingesetztem Zentrierstift 10 ragt somit der Axialabschnitt 14 bzw. der Fixierabschnitt 18 mit einem Überstand 19 aus der Aufnahmebohrung 16 bzw. aus der dem Zentrum des Reaktordruckbehälters 1 abgewandten Außenseite 20 der Platte 4 hervor. Im Endmontagezustand ist der Überstand 19 radial nach außen aufgeweitet, wodurch dieser die Form etwa eines Kegelstumpfes annimmt und dadurch der Zentrierstift 10 mit einem axialen Formschluss in der Aufnahmeborhung 16 gehalten ist. Der genannte Formschluss ist dabei in einer zum Zentrum des Reaktordruckbehälters 1 weisenden Axialrichtung 23 (Fig. 4) wirksam. In der Gegenaxialrichtung 24 wird der Zentrierstift 10 aufgrund der an der Innenseite 11 der Platte 4 anliegenden Radialschulter 15 formschlüssig gehalten.

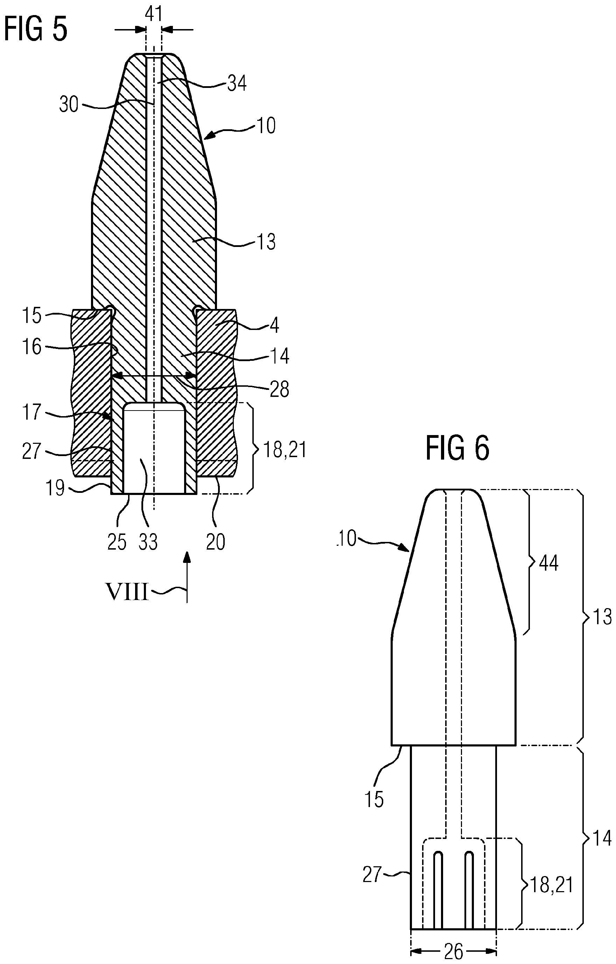

Im Vormontagezustand, in dem der Fixierabschnitt 18 noch nicht radial nach außen aufgeweitet ist (Fig. 5), ist der Fixierabschnitt 18 ein Hohlzylinder 21, der auf seiner gesamten Länge eine auf der Mantelfläche eines Kreiszylinders mit einheitlichem Außendurchmesser 26 verlaufende Außenumfangsfläche 27 aufweist. Dies trifft vorzugsweise für den gesamten zweiten Axialabschnitt 14 zu. Der Außendurchmesser 26 ist geringfügig kleiner als der Durchmesser 28 der Aufnahmebohrung 16, so dass der zweite Axialabschnitt 14 vorzugsweise spielfrei die Aufnahmebohrung 16 durchsetzt.

Die Aufweitung des Überstands 19 erfolgt, wie weiter unten noch näher erläutert wird, mit einem als Kegel 29 ausgebildeten Aufweitewerkzeug von der Außenseite 20 der Platte 4 her, indem das Aufweitewerkzeug in den Hohlzylinder 21 bzw. in eine Einführöffnung 32 eingepresst wird. Die dabei erforderlichen Kräfte in Vorschubrichtung des Aufweitewerkzeugs sind aufgrund der geringen Dicke der Wand des Hohlzylinders 21 ebenfalls gering. Zur Einstellung der Aufweitkräfte oder der Festigkeit des infolge der Aufweitung entstandenen Konus kann die Wanddicke variiert werden. Eine andere Möglichkeit besteht darin, dass in der Wand axial verlaufende Nuten eingebracht sind, welche gegebenenfalls die Wand durchsetzen.

Der Zentrierstift 10 weist eine Bohrung 34 auf, die einerseits in den Innenraum 33 des Fixierabschnitts 18 und andererseits in die Oberfläche des ersten Axialabschnitts 13 ausmündet. Die Bohrung 34 verläuft vorzugsweise koaxial zur Mittellängsachse 30 des Zentrierstifts 10 und bewirkt, dass der Innenraum 33 von vertikal nach oben fließendem Reaktorkühlmittel durchströmt wird, der Innenraum 33 also keinen Totraum bildet. Für die Aufweitung des Überstands 19 des Fixierabschnitts 18 hat die Bohrung 34 dagegen keinerlei Bedeutung. Dies ergibt sich schon daraus, dass der Durchmesser 41 der Bohrung 34 wesentlich kleiner ist als der Innendurchmesser 42 des radial nach außen zu verformenden Fixierabschnitts 18 bzw. Hohlzylinders 21.

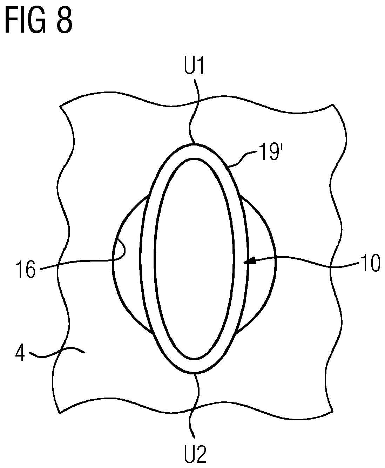

Eine Aufweitung des Überstands 19' kann auch dadurch erfolgen, dass der Überstand 19'des Zentrierstifts 10 an zumindest einer Umfangsposition (in Fig. 8 sind zwei Umfangspositionen U1, U2 gezeigt) aufgeweitet und dadurch der Formschluss zwischen Zentrierstift 10 und Platte 4 hergestellt wird. Der Überstand weist dabei eine von der Kreisform abweichende Querschnittsform auf, wie Fig. 8 entnehmbar ist. Bei dem genannten Ausführungsbeispiel ist der ursprünglich kreisrunde Überstand 19' seitlich zusammengedrückt, wobei er, zumindest angenähert, eine ovale Querschnittsform aufweist.

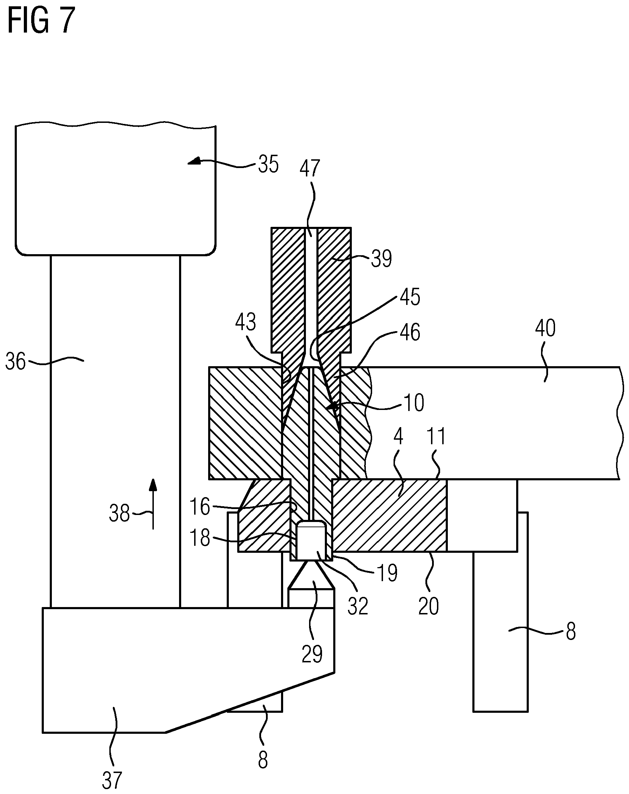

Zur Herstellung der in Rede stehenden Verbindungsanordnung bzw. zur Fixierung eines Zentrierstifts 10 an einer Platte 4 wird dieser z.B. mit Hilfe eines Manipulators mit seinem zweiten Axialabschnitt 14 voraus in die Aufnahmebohrung 16 der Platte 4 eingeführt. Die Aufweitung des Fixierabschnitts 18 bzw. dessen aus der Außenseite 20 der Platte 4 vorstehenden Überstands 19 erfolgt beispielsweise mit der in Fig. 7 stark vereinfacht dargestellten Vorrichtung 35. Diese umfasst ein vertikal verfahrbares Hubteil 36, beispielsweise einen Hydraulikzylinder, an dessen unterem Ende ein sich horizontal erstreckender Ausleger 37 fixiert ist. Das Hubteil 36 wird so verfahren, dass sich der Ausleger 37 zwischen zwei die Platte 4 tragenden Füßen 8 hindurch erstreckt. An dem sich dann unterhalb der Platte 4 befindlichen Freiende des Auslegers 37 ist oberseitig ein Aufweitewerkzeug angeordnet, nämlich der oben schon erwähnte Kegel 29. Wird das Hubteil 36 nach oben verfahren (Pfeil 38), wird der Kegel 29 in die Einführöffnung 32 des Fixierabschnitts 18 eingeführt und der Überstand 19 konusförmig aufgeweitet. Im Zuge dieser Aufweitung wird der Zentrierstift 10 von oben her mit einem Gegenhalter 39 in der Aufnahmebohrung 16 der Platte 4 gehalten. Zur radialen Führung des Zentrierstifts 10 ist auf die Innenseite 11 der Platte 4 eine plattenförmige Schablone 40 aufgesetzt, welche von einer vertikal verlaufenden Bohrung 43 durchsetzt ist. Der Durchmesser der Bohrung 43 ist so bemessen, dass der erste Axialabschnitt 13 des Zentrierstifts 10 darin im Wesentlichen spielfrei gehalten ist.

Der erste Axialabschnitt 13 des Zentrierstiftes 10 weist einen sich konisch verjüngenden Endabschnitt 44 auf, welcher in einer komplementär gestalteten, sich vertikal nach unten öffnenden Aufnahme 45 des Gegenhalters 39 während der Aufweitung des Fixierabschnitts 18 einliegt. Die Dicke der Schablone 40 ist so bemessen, dass sich der erste Axialabschnitt 13 des Zentrierstiftes 10 vollständig oder zumindest teilweise innerhalb der Bohrung 43 befindet. Der die Aufnahme 45 tragende Teil 46 des Gegenhalters 39 ist so gestaltet, dass er im Wesentlichen spielfrei in die Bohrung 43 eingesetzt werden kann. Da die Montage eines Zentrierstiftes 10 an einem Kerngerüst 3 bekanntlich unter Wasser erfolgt, ist dafür Sorge zu tragen, dass das beim Aufsetzen des Gegenhalters 39 auf den konusförmigen Endabschnitt des Zentrierstiftes 10 in der Aufnahme 45 befindliche Wasser diesen Vorgang nicht behindert. Daher ist in dem Gegenhalter 39 eine in die Aufnahme 45 mündende Abflussbohrung 47 vorhanden.

Bei dem in Fig. 8 gezeigten Beispiel kann das oben beschriebene Verfahren ebenfalls angewendet werden. Das Aufweitewerkzeug ist jedoch nicht als Kegel, sondern z.B. als ein Zangenwerkzeug (nicht gezeigt) ausgebildet, mit dem der im Vormontagezustand kreisrunde Überstand 19' seitlich zusammengedrückt wird. Im Endmontagezustand nimmt dann der Überstand 19'eine zumindest angenähert ovale Querschnittsform an, wobei er an zwei sich diametral gegenüberliegenden Umfangspositionen U1, U2 aufgeweitet ist. An den genannten Positionen hintergreift der Überstand 19'den Rand der die Platte 4 durchsetzenden Öffnung 16. Der Zentrierstift 10 ist dabei formschlüssig an der Platte 4 bzw. in der Öffnung 16 fixiert.

## Patentansprüche

1. Verfahren zur Verbindung eines Zentrierstifts (10) mit einem Kerngitter (3) des Reaktordruckbehälters (1) eines Druckwasserreaktors, bei dem der Zentrierstift (10) in einer Aufnahmebohrung (16) einer am Kerngitter (3) vorhandenen Platte (4) fixiert wird, mit folgenden Schritten:
a) es wird ein Zentrierstift (10) mit einem ersten Axialabschnitt (13) und einem zweiten Axialabschnitt (14) bereitgestellt, wobei
- der erste Axialabschnitt (13) zur Zentrierung eines Brennelements (2) dient,
- der zweite Axialabschnitt (14) an seinem Freiende (17) in einen radial nach außen verformbaren Fixierabschnitt (18) übergeht,
- die Länge des zweiten Axialabschnitts (14) größer ist als die Dicke der Platte (4),
b) der Zentrierstift (10) wird mit seinem zweiten Axialabschnitt (14) in die Aufnahmebohrung (16) so eingesetzt, dass der erste Axialabschnitt (13) vertikal aus einer horizontal verlaufenden und dem Zentrum des Reaktordruckbehälters (1) zugewandten Innenseite (11) der Platte (4) vorsteht und der Fixerabschnitt (18) mit einem Überstand (19) aus einer der Innenseite (11) abgewandten Außenseite (20) der Platte (4) heraus ragt,
c) von der Außenseite (20) der Platte (4) her wird ein Aufweitewerkzeug an den Überstand (19) angenähert und dieser mit Hilfe des Aufweitewerkzeugs so aufgeweitet, dass er die Außenseite (20) der Platte (4)
unter Ausbildung eines Formschlusses in einer zum Zentrum des Reaktordruckbehälters (1) weisenden Axialrichtung (23) hintergreift,
d) während der Aufweitung des Überstands (19) des Fixierabschnitts (18) wird der Zentrierstift (10) mit einem Gegenhalter (39) in der Aufnahmebohrung (16) gehalten.

2. Verfahren nach Anspruch 1, **dadurch gekennzeichnet, dass** ein Zentrierstift (10) verwendet wird, dessen Fixierabschnitt (18) als Hohlzylinder (21) ausgestaltet ist.

3. Verfahren nach Anspruch 2, **dadurch gekennzeichnet, dass** die Wand (22) eine Einführöffnung (32) umgrenzt, in welche das Aufweitewerkzeug zur radialen Aufweitung des Überstands (19) eingeführt wird.

4. Verfahren nach Anspruch 3, **dadurch gekennzeichnet, dass** als Aufweitewerkzeug ein Kegel (29) in die Einführöffnung (32) gepresst wird.

5. Verfahren nach Anspruch 2, **dadurch gekennzeichnet, dass** der Überstand (19) mit Hilfe des Aufweitewerkzeugs an wenigstens einer Umfangsposition aufgeweitet wird.

6. Verfahren nach Anspruch 5, **dadurch gekennzeichnet, dass** der Überstand (19) mit Hilfe des Aufweitewerkzeugs seitlich zusammengedrückt wird.

## Claims

1. Method for connecting a centering pin (10) to a core grid plate (3) of the reactor pressure vessel (1) of a pressurized water reactor, wherein the centering pin (10) is retained in a mounting bore (16) of a plate (4) provided on the core grid plate (3), the method comprising the following steps:
a) providing a centering pin (10) with a first axial section (13) and a second axial section (14), wherein
- the first axial section (13) is provided to center a fuel element (2)
- the second axial section (14) merges at its free end (17) into a radially outwardly deformable fixing section (18),
- the length of the second axial section (14) is greater than the thickness of the plate (4),
b) inserting the centering pin (10) with its second axial section (14) into the mounting bore (16) in such a way that the first axial section (13) extends vertically from a horizontally extending inner side (11) of the plate (4), which faces the center of the reactor pressure vessel (1), and in such a way that the deformable fixing section (18) protrudes from an outer side (20) of the plate (4), which faces away from the inner side (11), by a projection (19),
c) moving an expanding tool (20) towards the projection (19) from the outer side (20) of the plate (4) and expanding the latter by means of the expanding tool in such a way that it engages the outer side (20) of the plate (4) from behind in an axial direction (23) facing the center of the reactor pressure vessel (1) while forming a form-fitting connection,
d) retaining the centering pin (10) in the mounting bore (16) with a counter-holder (39) during widening of the projection (19) of the fixing section (18).

2. Method according to claim 1, **characterized by** using a centering pin (10) having a fixing section (18) that is arranged as a hollow cylinder (21).

3. Method according to claim 2, **characterized in that** the wall (22) surrounds an insertion opening (32) into which the expanding tool is introduced for radial widening the projection (19).

4. Method according to claim 3, **characterized by** pressing a cone (29) as the expansion tool into the insertion opening (32).

5. Method according to claim 2, **characterized by** widening the projection (19) at at least one circumferential position by means of the expanding tool.

6. Method according to claim 5, **characterized by** pressing the projection (19) laterally by means of the expanding tool.

## Revendications

1. Procédé de liaison d'une broche de centrage (10) à une grille de coeur (3) de la cuve (1) d'un réacteur à eau pressurisée, procédé dans lequel la broche de centrage (10) est immobilisée dans un perçage de réception (16) d'une plaque (4) placée au niveau de la grille de coeur (3) comportant les étapes suivantes :
a) une broche de centrage (10) comportant un premier tronçon axial (13) et un deuxième tronçon axial (14) est fournie,
- le premier tronçon axial (13) servant au centrage d'un crayon combustible (2),
- le deuxième tronçon axial (14) se transformant, sur son extrémité libre (17), en une partie de fixation (18) déformable radialement vers l'extérieur,
- la longueur du deuxième tronçon axial (14) étant plus grande que l'épaisseur de la plaque (4),
b) la broche de centrage (10) est utilisée, avec son deuxième tronçon axial (14), dans le perçage de réception (16) de telle sorte que le premier tronçon axial (13) dépasse verticalement d'un côté intérieur (11), horizontal et opposé au centre de la cuve (1), de la plaque (4) et la partie de fixation (18) dépasse d'un côté extérieur (20), opposé au côté intérieur (11), de la plaque (4) avec une projection (19),
c) un outil d'élargissement est approché, depuis le côté extérieur (20) de la plaque (4), de la projection (19) et celle-ci est élargie à l'aide de l'outil d'élargissement de manière à saisir par l'arrière le côté extérieur (20) de la plaque (4) en formant une liaison par complémentarité de forme dans un sens axial (23) vers le centre de la cuve de pression (1),
d) pendant l'élargissement de la projection (19) de la partie de fixation (18), la broche de centrage (10) est maintenue avec un outil de blocage (39) à l'intérieur du perçage de réception (16).

2. Procédé selon la revendication 1, **caractérisé en ce qu'**on utilise une broche de centrage (10) dont la partie de fixation (18) a la forme d'un cylindre creux (21).

3. Procédé selon la revendication 2, **caractérisé en ce que** la paroi (22) délimite un orifice d'introduction (32) dans lequel l'outil d'élargissement est introduit pour élargir radialement la projection (19).

4. Procédé selon la revendication 3, **caractérisé en ce que** c'est un cône (29) qui est introduit en pressant dans l'orifice d'introduction (32) en tant qu'outil d'élargissement.

5. Procédé selon la revendication 2, **caractérisé en ce que** la projection (19) est élargie à l'aide d'un outil d'élargissement sur au moins une position périphérique.

6. Procédé selon la revendication 5, **caractérisé en ce que** la projection (19) est comprimée sur le côté à l'aide de l'outil d'élargissement.
